# EUROPÄISCHE PATENTSCHRIFT

(11) **EP 2 856 755 B1**
(45) Veröffentlichungstag und Bekanntmachung des Hinweises auf die Patenterteilung: **12.02.2020**
(21) Anmeldenummer: 13725104.7
(22) Anmeldetag: 14.05.2013
(51) Int. Cl.: H04N 7/18, G08B 13/196

(54) **VORRICHTUNG UND VERFAHREN ZUR AUFNAHME VON BILDERN EINES FAHRZEUGUNTERBODENS**
DEVICE AND METHOD FOR RECORDING IMAGES OF A VEHICLE UNDERBODY..
DISPOSITIF ET PROCÉDÉ DE PRISE DE VUES D'UN PLANCHER DE VÉHICULE..

(30) Priorität: 31.05.2012 DE 102012209224
(43) Veröffentlichungstag der Anmeldung: 08.04.2015
(73) Patentinhaber: Beissbarth GmbH, 80993 München (DE)
(72) Erfinder: TAKAMI, Masato, 69115 Heidelberg (DE)
(74) Vertreter: Schmitt-Nilson Schraud Waibel Wohlfrom Patentanwälte Partnerschaft mbB
(86) Internationale Anmeldenummer: PCT/EP2013/059865
(87) Internationale Veröffentlichungsnummer: WO 2013/178460

(56) Entgegenhaltungen:
- WO-A2-2006/091874
- DE-A1- 10 038 731

## Beschreibung

Die Erfindung betrifft eine Vorrichtung und ein Verfahren zur Aufnahme von Bildern eines Fahrzeugunterbodens.

### Stand der Technik

Es sind verschiedene Vorrichtungen und Verfahren zur videobasierten Aufnahme eines flächenmäßig großen Objektes, wie z.B. des Unterbodens eines Fahrzeugs, bekannt.

Vorrichtungen zur Aufnahme des Unterbodens eines Fahrzeugs, sind z.B. als Aufnahmesysteme an Kontrollstationen, Einfahrten oder Straßen bekannt. Bei diesen Aufnahmesystemen kann grob zwischen mobilen Geräten, wie z.B. einer an einem Stab befestigten Kamera, und fest installierten Geräten unterschieden werden.

Fest installierte Aufnahmesysteme werden u.a. in US 2006/0170768 A1, WO 2006/059998 A, GB 2271483 A, US 2003/0185340 A1, EP 1619625 A2 und US 7102665 B1 beschrieben. Bei diesen Aufnahmesystemen wird mit einer einzigen Kamera oder einer quer zur Fahrtrichtung installierten Reihe von Kameras der Unterboden eines vorbeifahrenden Fahrzeuges optisch erfasst.

Ähnliche Systeme, bei denen der Sichtstrahl der Kamera mit Hilfe eines Spiegels auf den Fahrzeugboden gelenkt wird, werden z.B. in US 2008/0239079 A1, GB-2258321 A und WO 2006/093478 A1 beschrieben.

DE 197 05 047 A1 offenbart ein Verfahren und eine Vorrichtung zur Messung der Profiltiefe eines Kraftfahrzeugreifens. Dabei wird das Reifenprofil des Kraftfahrzeugreifens von Laserlicht eines Lasers beaufschlagt. Das Laserlicht erzeugt einen Lichtfleck auf die Profiloberfläche des Kraftfahrzeugreifens. Das von dem Reifenprofil reflektierte Licht wird durch einen bildauflösenden Sensor erfaßt. Dabei beobachtet der bildauflösende Sensor die Position und/oder die Form des Lichtflecks. Die Signale des bildauflösenden Sensors werden verarbeitet zur Erzeugung von Ausgangsdaten nach Maßgabe der Profiltiefe. Während der Messung wird der Kraftfahrzeugreifen rotiert, so daß die Messung an mehreren Stellen des Reifenprofils durchführbar ist.

### Offenbarung der Erfindung

Es ist Aufgabe der Erfindung, die optische Auflösung einer Vorrichtung zur Aufnahme des Unterbodens eines Fahrzeugs kostengünstig zu verbessern und den Raumbedarf einer solchen Vorrichtung zu reduzieren.

Eine erfindungsgemäße Aufnahmevorrichtung zur Aufnahme von Bildern eines Unterbodens eines Fahrzeugs hat wenigstens eine Kamera, die ausgebildet ist, Bilder von Bereichen des Fahrzeug-Unterbodens aufzunehmen, und Spiegel, die ausgebildet und angeordnet sind, um Bilder des Unterbodens in den Bildaufnahmebereich der wenigstens einen Kamera zu projizieren. Dabei sind die Spiegel insbesondere so angeordnet, dass sie quer zur Fahrtrichtung des Fahrzeugs nebeneinander liegende Bereiche des Unterbodens als übereinander angeordnete Bildbereich in den Bildaufnahmebereich der Kamera projizieren.

Die Erfindung umfasst auch ein Verfahren zur Aufnahme von Bildern eines Unterbodens eines Fahrzeugs mit einer Aufnahmevorrichtung, die Spiegel und wenigstens eine Kamera aufweist. Insbesondere schließt das Verfahren ein, die Aufnahmevorrichtung mit dem Fahrzeug zu überfahren und während des Überfahrens mit den Spiegeln Bilder von Bereichen des Unterbodens in die wenigstens eine Kamera zu projizieren und mit der wenigstens einen Kamera Bilder von in Fahrtrichtung versetzen Bereichen des Unterbodens aufzunehmen. Dabei sind die Spiegel so ausgebildet und angeordnet, dass sie quer zur Fahrtrichtung des Fahrzeugs nebeneinander liegende Bereiche des Unterbodens als übereinander angeordnete Bildbereiche in die wenigstens eine Kamera projizieren.

Die Spiegel sind dabei so angeordnet, dass sie das Format der aufgenommenen Bildbereiche modifizieren. Insbesondere wird ein langer, schmaler Bereich des Unterbodens eines Fahrzeugs auf einen Bereich mit einem bei Kameras üblichen Seitenverhältnis von beispielsweise 1:1, 1:2 oder 3:4 projiziert, indem nebeneinanderliegende Bereiche des Unterbodens als übereinanderliegende Bereiche des Bildes projiziert werden. Das so geschaffene Bild kann gut mit einer herkömmlichen, kostengünstigen Kamera aufgenommen werden.

Bei den aus dem Stand der Technik bekannten Systemen werden zur Bildaufnahme eine Mehrzahl von Kameras oder ein geeignet geformter Spiegel eingesetzt, um den Fahrzeugunterboden vollständig aufzunehmen. Eine Mehrzahl an Kameras ist zwangsläufig mit höheren Kosten und mit großen Datenmengen, die übertragen und verarbeitet werden müssen, verbunden. Die Variante, in der ein Spiegel eingesetzt wird, um den Sichtstrahl zu verlängern und dadurch einen größeren Sichtbereich zu erlangen, ist meist mit der Notwendigkeit von viel Bauraum verbunden. Weiterhin wird dabei die Auflösung im Verhältnis zum Sichtbereich verringert, so dass eine Kamera mit sehr hoher Auflösung benötigt wird, um die Auflösung der aufgenommenen Bilder nicht zu vermindern.

Die hier beschriebene Aufnahmevorrichtung ermöglicht die Aufnahme von großflächigen Objekten, insbesondere Objekten mit einem unausgewogenen Seitenverhältnis, bei beschränktem Bauraum, den Einsatz einer reduzierten Anzahl an Kameras mit gleichzeitig reduzierten Anforderungen an die optischen Komponenten. Dadurch können sowohl Kosten als auch Bauraum eingespart werden.

Durch den Einsatz von Spiegeln, die das Bild in eine obere und untere Bildhälfte aufteilen, kann die Anzahl der notwendigen Kameras zur Bildaufnahme verringert werden. Die obere und untere Bildhälfte bilden dabei insbesondere links und rechts nebeneinander liegende Bereiche des Unterbodens übereinander ab.

Die Auflösung in vertikaler Richtung wird dadurch zwar verringert, aber in horizontaler Richtung erhöht, was hier gewünscht ist. Das Prinzip kann bei Bedarf auch umgekehrt implementiert werden, so dass die vertikale Auflösung erhöht und die horizontale Auflösung verringert wird.

Die Anzahl der Kameras kann durch die Erfindung verringert werden, ohne dass die Auflösung in horizontaler (oder alternativ in vertikaler) Richtung verringert wird. Es besteht daher keine Notwendigkeit, auf teure Kameras mit besonders hoher Auflösung zurückzugreifen.

In einer Ausführungsform sind die Spiegel so angeordnet, dass sie den optischen Weg zwischen der wenigstens einen Kamera und dem Unterboden des Fahrzeugs verlängern. Durch die Verlängerung des Sichtstrahls auf begrenztem Raum mit Hilfe von Spiegeln, die den Sichtstrahl mehrfach hin und her lenken, sind die optischen Verzerrungen geringer als beim alternativen Einsatz eines stark weitwinkligen Objektivs oder Spiegels. Das Erreichen des notwendigen Schärfentiefebereichs stellt darüber hinaus durch den verlängerten Sichtstrahl niedrigere Anforderungen an die optischen Komponenten.

In einer Ausführungsform sind die Spiegel so angeordnet, dass sie den Bauraum quer zur Fahrtrichtung des Fahrzeugs ausnutzen, um den optischen Weg zwischen der wenigstens einen Kamera und dem Unterboden des Fahrzeugs zu verlängern. Auf diese Weise kann eine in Längsrichtung des Fahrzeugs besonders kompakte Vorrichtung, die einen langen optischen Weg aufweist, realisiert werden.

In einer Ausführungsform sind die Spiegel so angeordnet, dass sie den Bauraum parallel zur Fahrtrichtung des Fahrzeugs ausnutzen, um den optischen Weg zwischen der wenigstens eine Kamera und dem Unterboden des Fahrzeugs zu verlängern. Auf diese Weise kann eine in Querrichtung des Fahrzeugs besonders kompakte Vorrichtung, die einen langen optischen Weg aufweist, realisiert werden.

In einer Ausführungsform sind die Kamera und die Spiegel in einer Überfahrrinne angeordnet sind, die ausgebildet ist, um von dem aufzunehmenden Fahrzeug überfahren zu werden. In einer Überfahrrinne sind die Kamera und die Spiegel gut vor Beschädigung und Verschmutzung geschützt, ermöglichen gleichzeitig aber eine gute Aufnahme des Unterbodens des Fahrzeugs.

In einer Ausführungsform ist die Überfahrrinne durch einen Deckel verschlossen, in dem eine dem Unterboden des Fahrzeugs zugewandte Öffnung ausgebildet ist, die sich im Wesentlichen quer zur Fahrtrichtung des Fahrzeugs erstreckt. Eine derartige Öffnung ermöglicht es, streifenförmige Bilder von streifenförmigen Bereichen des Unterbodens des Fahrzeugs aufzunehmen. Durch die Kombination mehrerer in zeitlicher Abfolge während der Überfahrt des Fahrzeugs aufgenommener Aufnahmen kann ein Bild des gesamten Unterbodens des Fahrzeugs erzeugt werden.

In einer Ausführungsform schließt ein erfindungsgemäßes Verfahren ein, Bereiche in den aufgenommenen Bildern, die zum Unterboden des Fahrzeugs gehören, zu detektieren und nur diese Bereiche zur Auswertung zu verwenden. Durch das Herausfiltern von Bereichen der aufgenommenen Bilder, die nicht relevant für die Auswertung des Unterbodens sind, wird das Verfahren robuster, insbesondere bei einer geringfügigen Dekalibrierung.

In einer Ausführungsform schließt ein erfindungsgemäßes Verfahren ein, einen optischen Fluss zwischen zeitlich aufeinanderfolgenden Bildern zu berechnen und nur Bereiche der Bilder, in denen Flussvektoren gefunden werden, zur Auswertung zu verwenden. Die Auswertung des optischen Flusses ermöglicht eine zuverlässige Identifizierung der zum Unterboden des Fahrzeugs gehörenden Bereiche.

Die Erfindung wird im Folgenden anhand der beigefügten Figuren erläutert. Dabei zeigt:
Figur 1 eine seitliche Schnittansicht eines ersten Ausführungsbeispiels einer erfindungsgemäßen Aufnahmevorrichtung;
Figuren 2a bis 2c veranschaulichen die Aufspaltung des Kamerabildes durch eine erfindungsgemäße Spiegelanordnung gemäß einem ersten Ausführungsbeispiel;
Figuren 3a bis 3d veranschaulichen die Aufspaltung des Kamerabildes durch eine erfindungsgemäße Spiegelanordnung gemäß einem zweiten Ausführungsbeispiel.

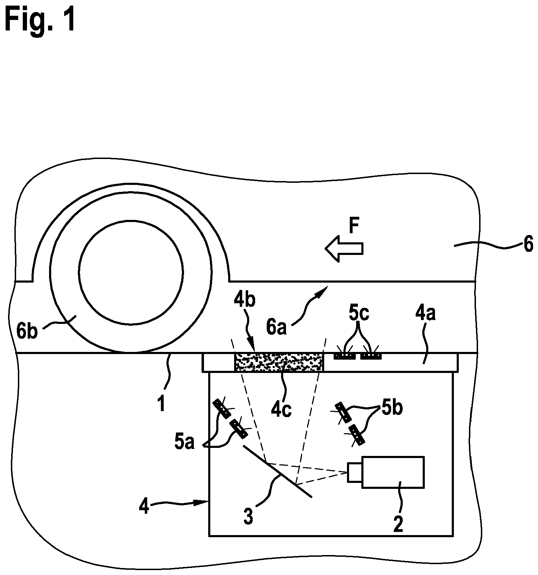

Figur 1 zeigt eine Seitenansicht eines ersten Ausführungsbeispiels einer erfindungsgemäßen Aufnahmevorrichtung, die in einer unterhalb einer Fahrbahnebene 1 ausgebildeten Überfahrrinne 4 installiert ist.

Die Überfahrrinne 4 ist auf ihrer oberen, dem Fahrzeug 6 zugewandten Seite mit einem Deckel 4a verschlossen, in dem eine Öffnung 4b ausgebildet ist. Die Öffnung 4b kann mit einer transparenten Scheibe 4c aus Glas oder Plexiglas verschlossen sein, um das Eindringen von Schmutz in die Überfahrrinne 4 zu vermeiden.

Die Öffnung 4b ist in der Figur 1 aus Gründen der Übersichtlichkeit überproportional breit gezeigt. In der Realität ist die Öffnung 4b in der Regel nur wenige Zentimeter breit, so dass sie auch unverschlossen problemlos von den Reifen 6b des Fahrzeugs 6 überfahren werden kann.

Die Öffnung 4b erstreckt sich wenigstens über die gesamte Breite des Fahrzeugs 6 und hat damit quer zur Fahrtrichtung F (senkrecht zur Zeichenebene der Figur 1) eine deutlich größere Ausdehnung (in der Regel mehr als 2m) als in Fahrtrichtung F (in der Regel wenige Zentimeter).

In der Überfahrrinne 4 sind eine Kamera 2 und ein Spiegelsystem 3 derart angeordnet, dass die Kamera 2 über das Spiegelsystem 3 ein Bild des Unterbodens 6a des Fahrzeugs 6 aufnehmen kann.

Beleuchtungsvorrichtungen 5a, 5b, 5c sind so angeordnet, dass sie den Unterboden 6a direkt und/oder indirekt über das Spiegelsystem 3 beleuchten. Um verschiedene mögliche Installationsorte der Beleuchtungsvorrichtungen 5a, 5b, 5c zu demonstrieren, sind in der Figur 1 mehrere Beleuchtungsvorrichtungen 5a, 5b, 5c gezeigt, die jeweils in der Überfahrrinne 4 oder auf dem Deckel 4a der Überfahrrinne 4 angeordnet sind. In der Praxis müssen jedoch nicht alle diese Beleuchtungsvorrichtungen 5a, 5b, 5c gleichzeitig vorhanden sein.

Zur Aufnahme von Bildern des Unterbodens 6a fährt das Fahrzeug 6 in der Fahrtrichtung F von rechts nach links über die Öffnung 8b, die im Deckel 4a der Überfahrrinne 4 ausgebildet ist. Selbstverständlich kann das Fahrzeug alternativ auch von links nach rechts über die Öffnung fahren. Während der Überfahrt des Fahrzeugs 6 wird die Kamera 2 wiederholt ausgelöst, um durch die im Deckel 6 ausgebildete Öffnung 4b mehrere Bilder verschiedener streifenförmiger Bereiche des Unterbodens 6a des Fahrzeugs 6 aufzunehmen.

Hat die Kamera 2 ein übliches Bildformat, z.B. mit einem Seitenverhältnis von 4:3, wird in einer herkömmlichen Anordnung aufgrund des zuvor beschriebenen ungleichen Seitenverhältnisses der Öffnung 4b ein Großteil der Aufnahmefläche des Filmes bzw. Bildsensors der Kamera 2 nicht genutzt. Um in der Richtung quer zur Fahrtrichtung F (lange Ausdehnung der Öffnung 4b) die gewünschte Auflösung zu erreichen, müsste daher eine hochauflösende Kamera oder eine teure Spezialkamera, die ein entsprechendes Seitenverhältnis hat, verwendet werden.

Der Bilderfassungsbereich der Kamera 2 wird daher erfindungsgemäß durch ein geeignet ausgebildetes Spiegelsystem 3 der Höhe nach in wenigstens zwei Hälften aufgeteilt, die jeweils seitlich abgelenkt werden, so dass nebeneinander angeordnete Bereiche des Unterbodens 6a in übereinander angeordnete Bereiche des Bilderfassungsbereiches der Kamera 2 projiziert werden.

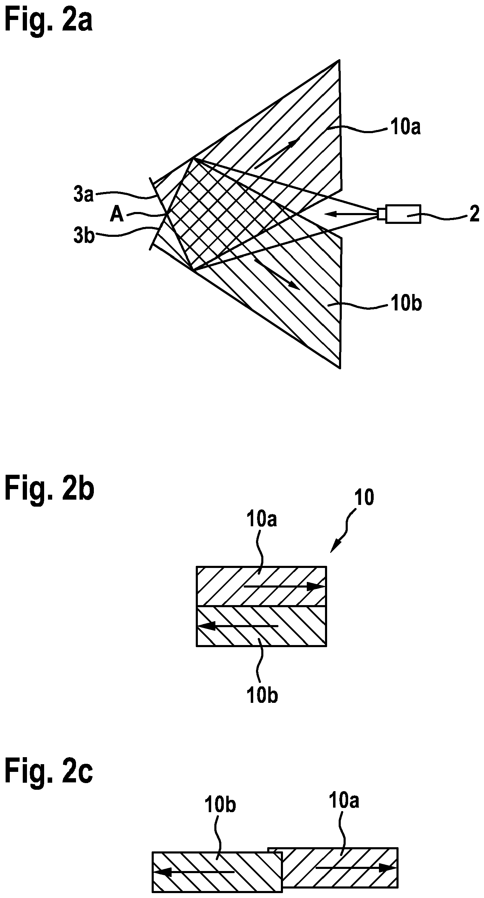

Die Figuren 2a bis 2c veranschaulichen die erfindungsgemäße Aufspaltung des Bilderfassungsbereiches der Kamera 2 in eine obere und eine untere Hälfte und die Ablenkung des Sichtfeldes durch ein geeignetes Spiegelsystem 3a, 3b.

Fig. 2a zeigt eine Anordnung mit einer Kamera 2 und zwei Spiegeln 3a, 3b "von oben", d.h. aus Sicht der im Deckel 4a ausgebildeten Öffnung 4b.

Die beiden Spiegel 3a und 3b sind senkrecht zur Zeichenebene übereinander angeordnet und in Bezug einer Achse A, die ebenfalls senkrecht zur Zeichenebene verläuft, gegeneinander verdreht angeordnet, so dass ein erster, seitlicher Bereich des Unterbodens 6a in einen oberen Bereich 10a des Bilderfassungsbereiches 10 der Kamera 2 projiziert wird, und ein zweiter seitlicher Bereich des Unterbodens 6a in einen unteren Bereich 10b des Bilderfassungsbereiches 10 der Kamera 2 projiziert wird.

Fig. 2b zeigt schematisch den Bilderfassungsbereich 10 mit einem oberen Bereich 10a, der einem ersten seitlichen Bereich des Unterbodens 6a entspricht, und einem unteren Bereich 10b, der einem zweiten seitlichen Bereich des Unterbodens 6a entspricht.

Fig. 2c veranschaulicht, wie die beiden Bereiche 10a und 10b am Unterboden 6a des Fahrzeugs 6 nebeneinander angeordnet sind.

Die in den Figuren 2a bis 2c gezeigte Verwendung von zwei übereinander angeordneten Spiegeln 3a, 3b ist nur beispielhaft. Für den Fachmann ist offensichtlich, dass gegebenenfalls weitere Spiegel vorgesehen sein können, um den Unterboden 6a des Fahrzeugs 6 optisch in mehr als zwei Bereiche 10a, 10b zu unterteilen und mehrere dieser Bereiche übereinander in die Kamera 2 zu projizieren.

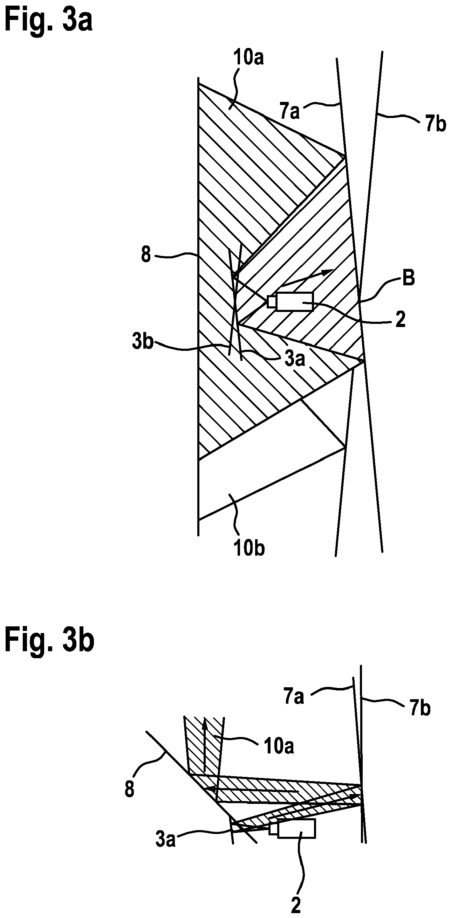

Die Figuren 3a bis 3d zeigen ein zweites Ausführungsbeispiel eines erfindungsgemäßen Spiegelsystems, bei dem zusätzlich weitere Spiegel 7a, 7b, 8 vorgesehen sind, um den optischen Weg zwischen der Kamera 2 und dem Unterboden 6a des Fahrzeugs 6 zu verlängern.

Die Figuren 3a und 3b zeigen in einer Draufsicht (Fig. 3a) und einer seitlichen Ansicht (Fig. 3b) schematisch den Strahlungsverlauf des oberen Bildbereiches 10a.

Die beiden gegenüber der Kamera 2 angeordneten ersten Spiegel 3a, 3b entsprechen den in der Fig. 2a gezeigten Spiegeln 3a, 3b.

Der vom oberen ersten Spiegel 3a gespiegelte Bildbereich 10a wird von einem gegenüberliegenden, hinter der Kamera 2 angeordneten oberen zweiten Spiegel 7a reflektiert und auf einen dritten Spiegel 8 projiziert, der aus Sicht der Kamera 2 hinter den ersten Spiegeln 3a, 3b angeordnet ist, und den Sichtstrahl auf den Unterboden 6a des Fahrzeugs 6 projiziert.

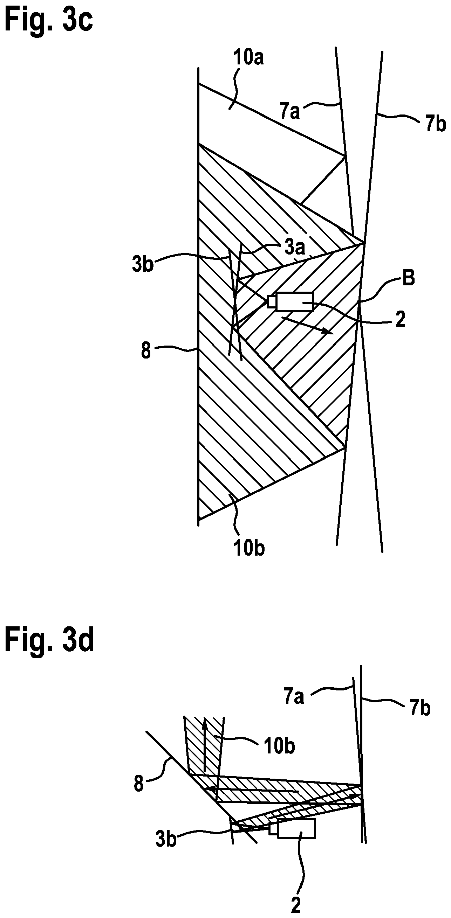

Die Figuren 3c und 3d zeigen in einer Draufsicht (Fig. 3c) und einer seitlichen Ansicht (Fig. 3d) schematisch den Strahlungsverlauf des unteren Bildbereiches 10b.

Der vom unteren ersten Spiegel 3b gespiegelte zweite Bildbereich 10b wird von einem unteren zweiten Spiegel, der ebenfalls hinter der Kamera 2 angeordnet ist, und gegenüber dem oberen zweiten Spiegel 7a um eine Achse B, die senkrecht zur Zeichenebene der Fig. 3a und 3c angeordnet ist, rotiert ist, auf den dritten Spiegel 8 projiziert, der den Sichtstrahl auf den Unterboden 6a des Fahrzeugs 6 ablenkt.

Durch die in den Figuren 3a bis 3d gezeigte Anordnung mehrerer Spiegel wird der optische Weg der Sichtstrahlen zwischen der Kamera 2 und dem Unterboden 6a des Fahrzeugs 6 parallel zur Fahrtrichtung F des Fahrzeugs 6 verlängert. Alternativ können die Spiegel 3a, 3b, 7a, 7b, 8 auch so angeordnet werden, dass die Sichtstrahlen den Bauraum quer zur Fahrtrichtung F des Fahrzeugs 6 ausnutzen, bevor sie durch den dritten Spiegel 8 nach oben in Richtung auf den Unterboden 6a des Fahrzeugs 6 abgelenkt werden.

Durch die in den Figuren 3a bis 3c gezeigte Verlängerung des optischen Weges der Sichtstrahlen wird der Sichtbereich der Kamera 2 vergrößert, ohne dass ein stark weitwinkliges Objektiv eingesetzt wird. Da ein verlängerter Sichtstrahl einer affinen Abbildung näher kommt als ein stark weitwinkliges Objektiv bzw. ein stark weitwinkliger Spiegel, ergeben sich auf diese Weise geringere Verzerrungen und die Qualität der von der Kamera 2 aufgenommenen Bilder wird verbessert.

## Patentansprüche

1. Aufnahmevorrichtung zur Aufnahme von Bildern (10) eines Unterbodens (6a) eines Fahrzeugs (6) mit:
wenigstens einer Kamera (2), die ausgebildet ist, Bilder (10) von Bereichen des Unterbodens (6a) aufzunehmen;
Spiegeln (3, 3a, 3b, 7a, 7b, 8), die ausgebildet und angeordnet sind, um Bilder von Bereichen des Unterbodens (6a) in die wenigstens eine Kamera (2) zu projizieren,
**dadurch gekennzeichnet, dass**
die Spiegel (3, 3a, 3b, 7a, 7b, 8) so angeordnet sind, dass sie quer zur Fahrtrichtung des Fahrzeugs (6) nebeneinander liegende Bereiche des Unterbodens (6a) als übereinander angeordnete Bildbereiche (10a, 10b) in die wenigstens eine Kamera (2) projizieren.

2. Aufnahmevorrichtung nach Anspruch 1, wobei mehrere Spiegel (3, 3a, 3b, 7a, 7b, 8) so angeordnet sind, dass sie den optischen Weg zwischen der wenigstens einen Kamera (2) und dem Unterboden (6a) des Fahrzeugs (6) verlängern.

3. Aufnahmevorrichtung nach Anspruch 2, wobei die Spiegel (3, 3a, 3b, 7a, 7b, 8) so angeordnet sind, dass sie den Bauraum quer zur Fahrtrichtung (F) des Fahrzeugs (6) ausnutzen, um den optischen Weg zwischen der wenigstens einen Kamera (2) und dem Unterboden (6a) des Fahrzeugs (6) zu verlängern.

4. Aufnahmevorrichtung nach Anspruch 2 oder 3, wobei die Spiegel (3, 3a, 3b, 7a, 7b, 8) so angeordnet sind, dass sie den Bauraum parallel zur Fahrtrichtung (F) des Fahrzeugs (6) ausnutzen, um den optischen Weg zwischen der wenigstens einen Kamera (2) und dem Unterboden (6a) des Fahrzeugs (6) zu verlängern.

5. Aufnahmevorrichtung nach einem der vorangehenden Ansprüche, wobei die wenigstens eine Kamera (2) und die Spiegel (3, 3a, 3b, 7a, 7b, 8) in einer Überfahrrinne (8) angeordnet sind, die ausgebildet ist, von dem aufzunehmenden Fahrzeug (6) überfahren zu werden.

6. Aufnahmevorrichtung nach Anspruch 5, wobei die Überfahrrinne (8) durch einen Deckel (4a) verschlossen ist, in dem eine dem Unterboden (6a) des Fahrzeugs (6) zugewandte Öffnung (4b) ausgebildet ist, die sich im Wesentlichen quer zur Fahrtrichtung des Fahrzeugs (6) erstreckt.

7. Aufnahmevorrichtung nach einem der vorangehenden Ansprüche, wobei die Spiegel (3, 3a, 3b, 7a, 7b, 8) so angeordnet sind, dass durch eine Anordnung mehrerer Spiegel (3, 3a, 3b, 7a, 7b, 8) der optische Weg der Sichtstrahlen zwischen dem Unterboden (6a) und der wenigstens einen Kamera (2) verlängert wird, um den Sichtbereich der wenigstens einen Kamera (2) zu vergrößern.

8. Verfahren zur Aufnahme von Bildern eines Unterbodens (6a) eines Fahrzeugs (6) mit einer Aufnahmevorrichtung, die Spiegel (3, 3a, 3b, 7a, 7b, 8) und wenigstens eine Kamera (2) aufweist, wobei das Verfahren umfasst:
mit den Spiegeln (3, 3a, 3b, 7a, 7b, 8) Bilder von Bereichen des Unterbodens (6a) in die wenigstens eine Kamera (2) zu projizieren; und
mit der wenigstens einen Kamera (2) Bilder (10) von den Bereichen des Unterbodens (6a) aufzunehmen,
**dadurch gekennzeichnet, dass** die Spiegel (3, 3a, 3b, 7a, 7b, 8) so ausgebildet und angeordnet sind, dass sie quer zur Fahrtrichtung des Fahrzeugs (6) nebeneinander liegende Bereiche des Unterbodens (6a) als übereinander angeordnete Bildbereiche (10a, 10b) in die wenigstens eine Kamera (2) projizieren.

9. Verfahren nach Anspruch 8, wobei das Verfahren einschließt, die Aufnahmevorrichtung mit dem Fahrzeug (6) zu überfahren.

10. Verfahren nach Anspruch 8 oder 9, wobei das Verfahren einschließt, Bereiche, die zum Unterboden (6a) des Fahrzeugs (6) gehören, in den aufgenommenen Bildern (10) zu detektieren und nur diese Bereiche zur Auswertung zu verwenden.

11. Verfahren nach Anspruch 10, wobei das Verfahren einschließt, einen optischen Fluss zwischen zeitlich aufeinander folgenden Bildern (10) zu berechnen und nur Bereiche der Bilder (10), in denen Flussvektoren gefunden werden, zur Auswertung zu verwenden.

12. Verfahren nach einem der Ansprüche 8 bis 11, wobei die Spiegel (3, 3a, 3b, 7a, 7b, 8) so angeordnet sind, dass durch eine Anordnung mehrerer Spiegel (3, 3a, 3b, 7a, 7b, 8) der optische Weg der Sichtstrahlen zwischen dem Unterboden (6a) und der wenigstens einen Kamera (2) verlängert wird, um den Sichtbereich der wenigstens einen Kamera (2) zu vergrößern.

## Claims

1. A recording device for recording images (10) of an underbody (6a) of a vehicle (6), comprising:
at least one camera (2) which configured to record images (10) of areas of the underbody (6a);
mirrors (3, 3a, 3b, 7a, 7b, 8) which are configured and arranged to project images of areas of the underbody (6a) into the at least one camera (2),
**characterised in that**
the mirrors (3, 3a, 3b, 7a, 7b, 8) are arranged to project adjoining areas of the underbody (6a) transversely to the driving direction of the vehicle (6) into the at least one camera (2) as image areas (10a, 10b) that are arranged stacked one above the other.

2. A recording device according to claim 1,
wherein a plurality of mirrors (3, 3a, 3b, 7a, 7b, 8) are arranged in such a way to extend the optical path between the at least one camera (2) and the underbody (6a) of the vehicle (6).

3. A recording device according to claim 2,
wherein the mirrors (3, 3a, 3b, 7a, 7b, 8) are arranged in such a way to utilize the installation space transverse to the driving direction (F) of the vehicle (6) in order to extend the optical path between the at least one camera (2) and the underbody (6a) of the vehicle (6).

4. A recording device according to claim 2 or 3,
wherein the mirrors (3, 3a, 3b, 7a, 7b, 8) are arranged in such a way to utilize the installation space parallel to the driving direction (F) of the vehicle (6) in order to extend the optical path between the at least one camera (2) and the underbody (6a) of the vehicle (6).

5. A recording device according to any of the preceding claims,
wherein the at least one camera (2) and the mirrors (3, 3a, 3b, 7a, 7b, 8) are arranged in a drive-over channel (8) which is configured to be driven over by the vehicle (6) to be recorded.

6. A recording device according to claim 5,
wherein the drive-over channel (8) is closed by a cover (4a) having formed therein an opening (4b) facing the underbody (6a) of the vehicle (6), the opening (4b) extending substantially transversely to the driving direction of the vehicle (6).

7. A recording device according to any of the preceding claims,
wherein the mirrors (3, 3a, 3b, 7a, 7b, 8) are arranged such that an assembly of a plurality of mirrors (3, 3a, 3b, 7a, 7b, 8) extends the optical path of the visual beams between the underbody (6a) and the at least one camera (2) in order to enlarge the field of vision of the at least one camera (2).

8. A method of recording images of an underbody (6a) of a vehicle (6) by means of a recording device comprising mirrors (3, 3a, 3b, 7a, 7b, 8) and at least one camera (2), said method comprising the steps of:
projecting, by means of said mirrors (3, 3a, 3b, 7a, 7b, 8), images of areas of the underbody (6a) into the at least one camera (2); and
by means of said at least one camera (2), recording images (10) of areas of the underbody (6a),
**characterised in that** the mirrors (3, 3a, 3b, 7a, 7b, 8) are configured and arranged to project adjoining areas of the underbody (6a) transversely to the driving direction of the vehicle (6) into the at least one camera (2) as image areas (10a, 10b) that are arranged stacked one above the other.

9. The method according to claim 8,
wherein the method comprises driving over the recording device with the vehicle (6).

10. The method according to claim 8 or 9,
wherein the method comprises detecting areas belonging to the underbody (6a) of the vehicle (6) in the recorded images (10) and using only those areas for evaluation.

11. The method according to claim 10,
wherein the method comprises calculating an optical flow between temporally consecutive images (10) and using only areas of the images (10) in which flow vectors are found for evaluation.

12. The method according to any of claims 8 to 11,
wherein the mirrors (3, 3a, 3b, 7a, 7b, 8) are arranged such that an assembly of a plurality of mirrors (3, 3a, 3b, 7a, 7b, 8) extends the optical path of the visual beams between the underbody (6a) and the at least one camera (2) in order to enlarge the field of vision of the at least one camera (2).

## Revendications

1. Dispositif de prise de vues (10) d'un plancher (6a) de véhicule (6) avec:
au moins une caméra (2), constituée de manière à prendre des vues (10) de zones du plancher (6a) ;
des miroirs (3, 3a, 3b, 7a, 7b, 8), constitués et agencés de manière à projeter des vues de zones du plancher (6a) dans la caméra (2), une au moins,
**caractérisé en ce que**
les miroirs (3, 3a, 3b, 7a, 7b, 8) sont agencés de telle sorte qu'ils projettent des zones adjacentes du plancher (6a) en tant que zones de vues superposées (10a, 10b) dans la caméra (2), une au moins, transversalement à la direction de déplacement du véhicule (6).

2. Le dispositif de prise de vues selon la revendication 1, dans lequel plusieurs miroirs (3, 3a, 3b, 7a, 7b, 8) sont agencés de telle sorte qu'ils allongent le chemin optique entre la caméra (2), une au moins, et le plancher (6a) du véhicule (6).

3. Le dispositif de prise de vues selon la revendication 2, dans lequel les miroirs (3, 3a, 3b, 7a, 7b, 8) sont agencés de telle sorte qu'ils exploitent l'espace de construction transversalement à la direction de déplacement (F) du véhicule (6) pour allonger le chemin optique entre la caméra (2), une au moins, et le plancher (6a) du véhicule (6).

4. Le dispositif de prise de vues selon la revendication 2 ou 3, dans lequel les miroirs (3, 3a, 3b, 7a, 7b, 8) sont agencés de telle sorte qu'ils exploitent l'espace de construction parallèlement à la direction de déplacement (F) du véhicule (6) pour allonger le chemin optique entre la caméra (2), une au moins, et le plancher (6a) du véhicule (6).

5. Le dispositif de prise de vues selon l'une quelconque des revendications précédentes, dans lequel la caméra (2), une au moins, et les miroirs (3, 3a, 3b, 7a, 7b, 8) sont agencés dans un canal franchissable (8) constitué de manière à ce que le véhicule (6) faisant l'objet de la prise de vues puisse rouler dessus.

6. Le dispositif de prise de vues selon la revendication 5, dans lequel le canal franchissable (8) est obturé par un couvercle (4a), dans lequel est pratiquée une ouverture tournée vers le plancher (6a) du véhicule (6), qui s'étend pour l'essentiel transversalement à la direction de déplacement du véhicule (6).

7. Le dispositif de prise de vues selon l'une quelconque des revendications précédentes, dans lequel les miroirs (3, 3a, 3b, 7a, 7b, 8) sont agencés de telle sorte que l'agencement de plusieurs miroirs (3, 3a, 3b, 7a, 7b, 8) permet d'allonger le chemin optique des faisceaux de visée entre le plancher (6a) et la caméra (2), une au moins, afin d'agrandir le champ visuel de la caméra (2), une au moins.

8. Procédé de prise de vues d'un plancher (6a) de véhicule (6) avec un dispositif de prise de vues présentant des miroirs (3, 3a, 3b, 7a, 7b, 8) et au moins une caméra (2), ledit procédé comprenant :
de projeter avec les miroirs (3, 3a, 3b, 7a, 7b, 8) des vues de zones du plancher (6a) dans la caméra (2), une au moins ; et
de prendre des vues (10) des zones du plancher (6a) avec la caméra (2), une au moins,
**caractérisé en ce que** les miroirs (3, 3a, 3b, 7a, 7b, 8) sont constitués et agencés de telle sorte qu'ils projettent des zones adjacentes du plancher (6a) en tant que zones de vues superposées (10a, 10b) dans la caméra (2), une au moins, transversalement à la direction de déplacement du véhicule (6).

9. Procédé selon la revendication 8, dans lequel le procédé inclut de rouler sur le dispositif de prise de vues avec le véhicule (6).

10. Procédé selon la revendication 8 ou 9, dans lequel le procédé inclut de détecter dans les prises de vues (10) des zones qui appartiennent au plancher (6a) du véhicule (6) et de n'utiliser que ces zones pour l'analyse.

11. Procédé selon la revendication 10, dans lequel le procédé inclut de calculer un flux optique entre des prises de vue (10) successives et de n'utiliser pour l'analyse que les zones des prises de vues (10) dans lesquelles des vecteurs de flux ont été trouvés.

12. Procédé selon l'une quelconque des revendications 8 à 11, dans lequel les miroirs (3, 3a, 3b, 7a, 7b, 8) sont agencés de telle sorte que l'agencement de plusieurs miroirs (3, 3a, 3b, 7a, 7b, 8) permet d'allonger le chemin optique des faisceaux de visée entre le plancher (6a) et la caméra (2), une au moins, afin d'agrandir le champ visuel de la caméra (2), une au moins.
